# EUROPÄISCHE PATENTSCHRIFT

(11) **EP 1 388 510 B1**
(45) Veröffentlichungstag und Bekanntmachung des Hinweises auf die Patenterteilung: **19.10.2005**
(21) Anmeldenummer: 03016003.0
(22) Anmeldetag: 14.07.2003
(51) Int. Cl.: B65G 47/96, B65G 47/94

(54) **Transportsystem für Stückgutbehälter, insbesondere für Gepäckbehälter**
Conveyor system for article containers, especially luggage containers
Système de transport pour conteneur d'articles, notamment pour conteneur à bagages

(30) Priorität: 07.08.2002 DE 10236168
(43) Veröffentlichungstag der Anmeldung: 11.02.2004
(73) Patentinhaber: SIEMENS AKTIENGESELLSCHAFT, 80333 München (DE)
(72) Erfinder: Brixius, Wolfgang, 91077 Neunkirchen A.Br. (DE); Gräfer, Dominik, 90427 Nürnberg (DE); Hoene, Albrecht, Dr., 91074 Herzogenaurach (DE)

(56) Entgegenhaltungen:
- DE-A- 4 330 235
- US-A- 2 666 538
- US-A- 4 063 655

## Beschreibung

Die Erfindung betrifft ein Transportsystem für Stückgutbehälter, insbesondere für Gepäckbehälter auf einer im wesentlichen horizontalen Förderbahn mit mindestens zwei voneinander beabstandeten Förderern, von denen mindestens ein Förderer angetrieben ist sowie mit mindestens einer Einrichtung zum Entladen des Stückgutes unter Ausnutzung der Schwerkraft durch Kippen des Stückgutbehälters in eine Entladeposition quer zu seiner Transportrichtung.

Transportsysteme der eingangs beschriebenen Art werden beispielsweise verwendet, um von Reisenden aufgegebenes Fluggepäck innerhalb des Flughafens zu transportieren und bestimmungsgemäß zu sortieren. Anhand von abgreifbaren Informationen wird das in Behältern transportierte Gepäck seinen Bestimmungsorten zugeleitet. Das Entladen der Behälter, d.h. das Trennen des Fördergutes vom Förderhilfsmittel Behälter am Bestimmungsort bzw. an zum Bestimmungsort führenden Fördereinrichtungen erfolgt bisher auf unterschiedliche Weise.

So ist die sogenannte "dynamische Zwangsentleerung" eine Möglichkeit, den Behälter zu entleeren. Der Behälter wird entlang einer Schiene geführt, welche eine Schraubenbahn beschreibt, die den Behälter in eine Winkellage bringt, deren Achse parallel zur Transportrichtung liegt. Über einen Zeitraum "X" wird der Behälter in dieser Winkellage gehalten, so dass dem Inhalt genügend Zeit verbleibt aus dem Behälter zu rutschen.

Eine andere Lösung ist als das "bedingt dynamische, aber wählbare Entleerung" bekannt. Der zu entladende Behälter fährt auf eine Entladestation und wird dabei auf eine feste Teilung einer Anordnung von Halteelementen positioniert. Die Halteelemente greifen den Behälter während sie ihn weiterfördern. An einer bestimmten Behälterposition werden die Halteelemente um eine parallel zur Förderrichtung angeordnete Achse geschwenkt und so der Behälter in eine Schräglage gebracht. Nach Entleeren des Inhalts werden die Halteelemente wieder in die Ausgangslage zurückgeschwenkt und dem nachfolgenden Förderelement übergeben.

Schließlich ist die "statische, aber wählbare Entleerung" bekannt, bei der der zu entladende Behälter auf eine Entladestation fährt, dort auf die Geschwindigkeit Null (0) verzögert und innerhalb dieser Station um eine feste Drehachse gekippt wird. Dabei verbleibt der Behälter relativ zum Kippelement in gleicher Position. Das Kippelement verbleibt in der gekippten Position bis der Inhalt den Behälter verlassen hat. Nach Entleerung wird der Behälter wieder in die Ursprungslage
zurück gekippt, so dass er aus der Entladestation heraustransportiert werden kann.

Bei der als "Dynamische Zwangsentleerung" beschriebenen ersten Lösung besteht keine Möglichkeit der individuellen Auswahl der Behälter welche gekippt werden und welche nicht. Bei der zweiten Lösung ist es nachteilig, dass die Behälter auf eine feste Teilung einer Anordnung von Halteelementen eingetaktet werden müssen. Dadurch wird der Durchsatz reduziert. Auch bei der dritten Lösung entsteht ein durchsatzhemmendes Verzögern der Behälterdurchlaufgeschwindigkeit und somit ein sequentieller Kippprozess.

Insbesondere aus der EP 806 384 A2 ist bereits ein Transportsystem für Stückgutbehälter bekannt, bei dem zum Transport zwei voneinander beabstandeten Förderer dienen, von denen mindestens einer angetrieben ist. Einer der beiden Förderer weist dabei den Verlauf einer Raumkurvenbahn auf, d. h. der zugehörige Förderer verläuft aus der eigentlichen Förderebene heraus nach oben und nach Überschreitung eines höchsten Punktes wieder in die Förderebene zurück. Auf diese Weise wird der Stückgutbehälter auf einer Seite gegenüber der anderen Seite angehoben und damit quer zur Transportrichtung gekippt, wobei der Behälterboden zusammen mit einer Rutsche eine durchgehende schiefe Ebene in Form einer Rutsche bildet. Auf der Rutsche rutscht das Stückgut aufgrund seiner Gewichtskraft vom Stückgutbehälter nach unten, wodurch der Behälter entladen wird.

Um die Stückgutbehälter wahlweise entleeren zu können, ist eine Weiche vorgesehen, welche die Behälter, die nicht entleert werden sollen, über einen Bypass an der Entladeeinrichtung vorbeiführt.

Weiter ist in der DE 42 10 387 A1 ein System zur kontinuierlichen Förderung von Behältern beschrieben, die sich entlang einer im wesentlichen horizontalen Förderbahn bewegen. Die Behälter für hochtemperaturgeschmolzenes Material weisen ein Fahrwerk auf, das sich entlang der Fördebahn bewegt. Die Ladeschale des Behälters ist auf einer Seite gelenkig gelagert, so dass diese in einer Entladeposition quer zur Transportrichtung kippbar ist. Zum Kippen dient ein auf der gegenüberliegenden Seite angeordnetes Laufrad, welches im Entladebereich auf einer in Förderbahnrichtung verlaufenden Raumkurvenbahn abrollt. Auf diese Weise wird die Ladeschale während des Transports durch die Einrichtung zum Entladen des Materials einseitig angehoben und so in seine Kippstellung verschenkt. Das Fahrwerk bleibt dabei in der Förderbahnebene, wo die Laufräder auf zwei parallelen Schienen abrollen.

Ferner ist aus der DE 198 17 255 C1 ein Träger zum Transport von Werkstücken bekannt, bei dem eine programmgesteuerte Entriegelung der Stückgutbehälterseitenwand vorgesehen ist. 4

Im Entriegelungszustand bildet die nach außen geschwenkte Seitenwand zusammen mit der Bodenfläche des behälterartigen Trägers eine schiefe Ebene nach Art einer Rutsche, um die Werkstücke selbsttätig zu entladen.

Aufgabe der vorliegenden Erfindung ist die Schaffung eines neuen Transportsystems mit einer Einrichtung zum Entladen des Stückgutes unter Ausnutzung der Schwerkraft durch Kippen des Stückgutbehälters quer zu seiner Transportrichtung, unabhängig von dem Abstand der transportierten Behälter bei individueller Auswählbarkeit der zu kippenden Behälter.

Zur Lösung der Aufgabe wird erfindungsgemäß vorgeschlagen, dass zum Kippen des Stückgutbehälters in seine Entladeposition ein gesteuert von außen in den Förderweg des Behälters eingreifendes und mit dem Behälter lösbar verbindbares Koppelglied vorgesehen ist, mit dem der Stückgutbehälter während seines Transportes durch die Einrichtung zum Entladen des Stückgutes einseitig von mindestens einem der Förderer abhebbar und in seine Kippstellung verschwenkbar ist.

Die erfindungsgemäße Lösung ermöglicht es den Behältern, die Entladestation zu durchlaufen, ohne in der Geschwindigkeit reduziert werden zu müssen. Der Koppelvorgang des Stückgutbehälters mit dem Koppelglied ist individuell steuerbar, so dass jeder Behälter auch die Entladestation durchlaufen kann und ohne gekippt werden zu müssen. D.h., die Kippbewegung ist bedarfsweise zuschaltbar.

Vorzugsweise wird vorgeschlagen, dass der von mindestens einem der Förderer abgehobene Stückgutbehälter mit seiner dem Koppelglied abgewandten Seitenkante auf dem angetriebenen Förderer aufliegend transportierbar ist. Damit wird es möglich, unter Beibehaltung der Transportgeschwindigkeit und ohne zusätzlichen Antrieb den Stückgutbehälter durch die Entladestation zu transportieren, es muss lediglich für die Kippbewegung des Behälters gesorgt werden.

Es ist günstig, wenn mindestens der angetriebene Förderer ein endlos umlaufender Fördergurt ist. Dieser kann als Zahnriemen oder Nockenriemen ausgebildet sein, andere den Stückgutbehälter mitnehmende Förderer sind gleichsam denkbar.

Um zu verhindern, dass der einseitig angehobene Stückgutbehälter auf der Seite, wo seine Kante auf dem Förderer aufliegt seitlich verrutscht, ist nach einem anderen Merkmal der Erfindung vorgesehen, den Stückgutbehälter innerhalb der Einrichtung zum Entladen des Stückgutes auf seiner dem Koppelglied abgewandten Seitenwandfläche durch parallel zum angetriebenen Förderer angeordnete vertikal umlaufende Begrenzungsrollen zu stützen. Diese Abstützung kann alternativ statt der Rollen durch ein parallel zum angetriebenen Förderer verlaufendes Vertikalband erfolgen. Letztere Lösung hätte den Vorteil eines zusätzlichen Antriebes des Stückgutbehälters in der Entladestation, wenn dieses Vertikalband mit gleicher Geschwindigkeit wie der Förderer angetrieben ist.

In einer besonders günstigen Ausgestaltung der Erfindung wird vorgeschlagen, dass zum Kippen des Stückgutbehälters das mit dem Stückgutbehälter gekoppelte Koppelglied auf einer in Förderbahnrichtung verlaufenden Raumkurvenbahn zwangsgeführt ist, deren Verlauf sich aus dem Kippbewegungshub des Stückgutbehälters und seiner Transportbewegung in Förderrichtung zusammensetzt. Wenn das Koppelglied zwangsgeführt über diese Raumkurve bewegt wird, erfolgt die Hubbewegung des Stückgutbehälters ebenfalls zwangsweise beim Transport des Stückgutbehälters, ohne dass es eines besonderen zusätzlichen Kippantriebes bedarf.

Günstigerweise ist der Verlauf der Raumkurvenbahn durch den Weg bestimmt, den das mit dem Behälter gekoppelte Koppelglied während des Durchfahrens der Einrichtung zum Entladen des Stückgutes durchläuft. Das bedeutet, das die Raumkurvenbahn in Richtung der Förderbahn so geneigt ist, das die Position des Koppelgliedes zu dem Punkt, wo es mit dem Behälter gekoppelt ist stets gleich bleibt, bzw. der Abstand vom Koppelglied zum angetriebenen Förderer gleich bleibt.

Vorzugsweise ist die Bewegungsbahn für jedes Koppelglied als Teil einer als endlose Schleife geführten Laufschiene für eine Mehrzahl daran geführter Laufwagen ausgebildet, an denen jeweils das Koppelglied angeordnet ist. Jeweils ein auf der Schiene im Anfangsbereich der Raumkurvenbahn bereitgestellter Laufwagen ist gesteuert mit einem vorbeigeförderten vorherbestimmten Stückgutbehälter verbindbar und von diesem über die Raumkurvenbahn mitschleppbar. Durch das Mitschleppen über die Raumkurve wird der Stückgutbehälter in seine Kippstellung gezwungen, ohne dass irgendein zusätzlichen Kippantrieb erforderlich ist. Die Geschwindigkeit der Kippbewegung wir einzig durch die Geschwindigkeit des Stückgutbehälters auf der Förderbahn und die Ausbildung der Raumkurvenbahn bestimmt.

Da die Raumkurvenbahn als Teil einer endlosen Schleife ausgebildet ist, kann das Koppelglied am Ende der Raumkurvenbahn nach Lösen vom Stückgutbehälter über die endlose Schleife der Laufschiene zum Anfangsbereich der Raumkurvenbahn zurückgeführt werden.

Erfindungsgemäß wird der auf der Schiene im Anfangsbereich der Raumkurvenbahn bereitgestellte Laufwagen von einem Mitnehmer gesteuert und zeitgerecht in die Bewegungsbahn des Stückgutbehälter geführt. Dazu ist nach einem weiteren Merkmal der Erfindung der Mitnehmer als das Koppelglied hintergreifender Nocken am Umfang eines vertikal umlaufenden Rades ausgebildet, das unmittelbar neben dem unterhalb der Förderebene verlaufenden Anfangsbereich der Raumkurvenbahn angeordnet ist, die in diesem Bereich parallel zu Umfangsbahn des Rades verläuft.

Damit das Koppelglied in einfacher und betriebssicherer Weise mit dem Stückgutbehälter verbindbar ist, ist das Koppelglied als sich in Richtung des Stückgutbehälters erstreckende Stange ausgebildet, die in eine korrespondierende Ausnehmung des Behälters eingreift.

Die Erfindung weist eine Reihe besonderer Vorteile gegenüber dem Stand der Technik auf. Der Hauptvorteile ist, dass der Kippvorgang beliebig dem Transportvorgang zuschaltbar ist und vollkommen unabhängig von Behälterabständen ist. Aus einem Förderstrom können individuell Behälter ausgewählt werden, welche gekippt oder nicht gekippt werden sollen. Dies kann bei einer für diesen Vorgang unüblich hohen Geschwindigkeit geschehen und mit beliebig kleinem Abstand zwischen aufeinanderfolgenden Behältern. Dies hat wiederum einen hohen Durchsatz zur Folge. Weiterhin besteht die Kippvorrichtung aus extrem wenigen Teilen und Antrieben, welche die Erfindung zu einem außerordentlich kostengünstigen Element für diese Funktion werden lässt.

Insbesondere eliminiert die Erfindung die Nachteile der oben beschriebenen Lösungen des Standes der Technik. Da die Kinematik des Kippmechanismus an die Kinematik des Behälters angepasst ist, kann der Behälter ungehemmt und ohne Positionierzwänge auf die Kippvorrichtung auffahren.

Weitere Vorteile ergeben sich dadurch, dass die Laufwagen in ihren Abmessungen deutlich kleiner sind als die Behälter, so dass der Behälterdurchsatz durch das zur Verfügungsstellen einer genügenden Anzahl von Laufwagen in keinem Fall beschränkt wird. Da die translatorische Energie des Behälters für den Kippvorgang genutzt wird, ist keine gesonderte Energieübertragung notwendig. Der Kippvorgang wird in einer harmonischen Bewegung realisiert, was einen geräusch- und verschleißarmen Betrieb ermöglicht.

Ein Ausführungsbeispiel der Erfindung ist in der Zeichnung dargestellt und wird nachfolgend beschrieben. Es zeigt:
- Figur 1: die erfindungsgemäße Einrichtung zum Entladen des Stückgutes beim Kippvorgang und
- Figur 2: den Anfangsbereich der Raumkurvenbahn und die Laufwagen mit den Koppelgliedern

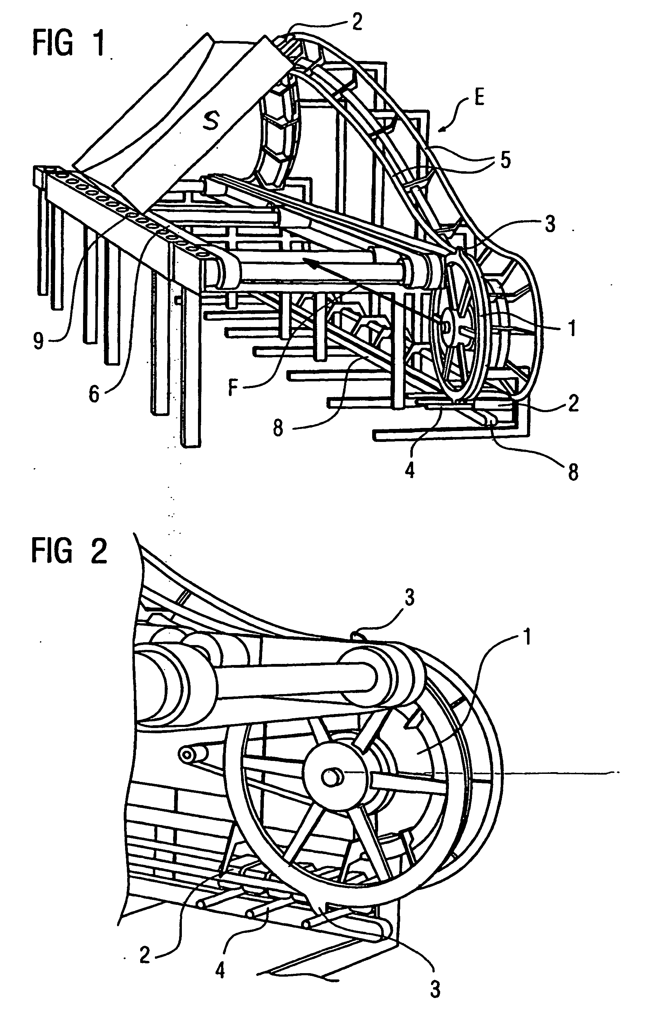

In der Zeichnung ist das Ausführungsbeispiel der Erfindung grob vereinfacht dargestellt. Mit S ist ein Stückgutbehälter der Erfindung bezeichnet, der beispielsweise aus einem formstabilen Kunststoff geformt ist. Die Oberfläche des Stückgutbehälters, auf der das zu transportierende Gut, z.B. Gepäck aufliegt, ist schalenförmig gestaltet, wie in der Figur 1 erkennbar ist. Der Stückgutbehälter S wird auf den Fördergurten 6 transportiert, von denen die auf der linken und rechten Seite der Zeichnung dargestellten Fördergurte angetrieben sind. Seitlich neben der Förderbahn ist die Einrichtung zum Entladen des Stückgutes dargestellt, die im wesentlichen aus der als geschlossene Schleife geführten Laufschiene 5 für darauf geführte Laufwagen 2 besteht. Die Laufschiene 5 ist in ihrem oberen Bereich in einer Raumkurvenbahn geführt, der die Laufwagen 2, wenn sie mit dem Stückgutbehälter S gekoppelt sind, zwangsweise folgen. Zum Koppeln der Laufwagen 2 mit den Stückgutbehältern S dienen die Koppelglieder 4 an den Laufwagen 2, die mit Hilfe des Rades 1 in die entsprechende Position zum Stückgutbehälter S gebracht werden. Dazu ist das Rad 1 am Umfang mit einem Nocken 3 versehen, der das stangenförmige Koppleglied 4 hintergreifend, beim Drehen des Rades 1 den Laufwagen 2 mit dem Koppelglied 4 in eine Position in der Förderbahn bringt, in der das Koppelglied in eine (nicht dargestellte Ausnehmung im Boden des Stückgutbehälter S greift, sobald dieser in die Entladestation E gefördert wird.

### Der Ablauf ist wie folgt:

In einem definierten Abstand des Stückgutbehälter S zur Entladestation E wird das vertikal umlaufende Rad 1 aktiviert und separiert bei seinem Umlauf entgehen dem Uhrzeigersinn mittels des am Umfang des Rades vorgesehenen Nockens 3 einen Laufwagen 2 aus der Warteschlange auf der Laufschiene 5 und führt diesen, das Koppelglied 4 hintergreifend in die Übernahmeposition. In dieser Position befindet sich das als Mitnehmerstange starr mit dem Laufwagen 2 verbundene Koppelglied 4 in der (nicht dargestellten) Aussparung im Boden des Stückgutbehälters, und zwar in der Mitte der Behälterlängsseite. Ab dieser Position ist der Nocken 3 des Rades 1 unter die Förderebene abgetaucht und hat sich dabei vom Laufwagen 2 bzw. dem Koppelglied 4 gelöst, so dass der Laufwagen 2, der keinen Primärantrieb aufweist, nun entlang der Laufschiene 5 frei verschiebbar ist. Der Stückgutbehälter S wird durch den angetriebenen Gurtförderer 6 weiter gefördert und dabei fährt, über die formschlüssige Verbindung zwischen dem Koppelglied 4 und der Aussparung im Behälterboden den Laufwagen 2 entlang der Laufschiene 5 eine seite nach oben. Um den Vortrieb des Stückgutbehälters während der Kippphase zu verbessern, ist es optional möglich neben dem Gurtförderer 6 auch ein angetriebenes Vertikalband anstelle der Begrenzungsrollen 9 zu verwenden, welches in gleicher Geschwindigkeit und Richtung wie der Gurtförderer 6 bewegt wird. Der Gurtförderer 6 kann sowohl mit dem Effekt Reibung also auch durch den Effekt Formschluss realisiert werden. Im weiteren Verlauf wird der Stückgutbehälter durch den Verlauf der Raumkurvenbahn der Laufschiene 5 in die dargestellte Schrägstellung geführt. Die Raumkurvenbahn der Laufschiene 5 ist dabei so gewählt, dass Beschleunigungen und Verzögerungen unterhalb einem g bleiben, so dass ein Abheben des Stückgutbehälters von dem Koppelglied 4 vermieden wird. Generell ist es aber möglich, beim Heben des Stückgutbehälters auch Beschleunigungen oberhalb der Erdbeschleunigung zu realisieren, wenn bei der Absicht höhere Verzögerungswerte zu erreichen, irgendein in den Stückgutbehälter eingreifender Haltemechanismus im Bereich der Koppelstange 4 vorgesehen wird, der ein unkontrolliertes Abheben des Behälters verhindert.

Nach erfolgtem Abwurf des Fördergutes in seiner Kippstellung wird der Stückgutbehälter S im weiteren Verlauf sanft, dem Laufschienenverlauf folgend, in die Horizontale zurückgeführt. Am Ende der Entladestation trennt sich der Laufwagen 2 aus der formschlüssigen Verbindung mit dem Stückgutbehälter S und taucht nach unten ab. Dort wird der Laufwagen 2 durch Gravitation oder durch einen Reibriemen 8 zurück zu der Übergabeposition des Rades 1 gefördert und reiht sich in die Warteschlange der Laufwagen 2 ein.

## Patentansprüche

1. Transportsystem für Stückgutbehälter (S), insbesondere für Gepäckbehälter, auf einer im Wesentlichen horizontalen Förderbahn mit mindestens einer Einrichtung (E)zum Entladen des Stückgutes unter Ausnutzung der Schwerkraft durch Kippen eines Stückgutbehälters (S) in eine Entladeposition quer zu seiner Transportrichtung,
**dadurch gekennzeichnet,**
**dass** mindestens zwei voneinander beabstandete Förderer (6) vorgesehen sind, von denen mindestens ein Förderer angetrieben ist,
wobei die Stückgutbehälter (S) frei auf den beiden Förderern (6) aufliegend gefördert werden,
**dass** die Einrichtung (E) zum Entladen des Stückgutes seitlich eines Förderers (6) eine als Schleife ausgebildete endlose Laufschiene (5) aufweist,
an der Koppelglieder (4) geführt sind, die von außen gesteuert am in Förderrichtung gesehen vorderen Ende der Laufschienenschleife mit einem vorherbestimmten Stückgutbehälter (S) koppelbar und am hinteren Ende der wieder entkoppelbar sind, wobei die Laufschienenschleife räumlich so verläuft, dass der Stückgutbehälter (S) während seines Transportes durch die Einrichtung mittels des zwangsgeführten Koppelglieds (4) einseitig von dem benachbarten Förderer (6) abgehoben und in eine Kippstellung verschwenkt wird.

2. Transportsystem für Stückgutbehälter nach Anspruch 1,
**dadurch gekennzeichnet, dass**
der von mindestens einem der Förderer (6) abgehobene Stückgutbehälter (S) mit seiner dem Koppelglied (4) abgewandten Seitenkante auf dem anderen angetriebenen Förderer (6) aufliegend transportierbar ist.

3. Transportsystem für Stückgutbehälter nach Anspruch 2 ,
**dadurch gekennzeichnet, dass**
mindestens der angetriebene Förderer (6) ein endlos umlaufender Fördergurt ist.

4. Transportsystem für Stückgutbehälter nach Anspruch 1 bis 3,
**dadurch gekennzeichnet, dass**
der Stückgutbehälter (S) innerhalb der Einrichtung zum Entladen des Stückgutes (E) auf seiner dem Koppelglied (4) abgewandten Seitenwandfläche durch parallel zum angetriebenen Förderer (6) angeordnete vertikal umlaufende Begrenzungsrollen (9) gestützt ist.

5. Transportsystem für Stückgutbehälter nach Anspruch 1 bis 4,
**dadurch gekennzeichnet, dass**
der Stückgutbehälter (S) innerhalb der Einrichtung zum Entladen des Stückgutes (E) auf seiner dem Koppelglied (4) abgewandten Seitenwandfläche durch ein parallel zum angetriebenen Förderer (6) verlaufendes Vertikalband abstützbar ist.

6. Transportsystem für Stückgutbehälter nach Anspruch 1 bis 5,
**dadurch gekennzeichnet, dass**
zum Kippen des Stückgutbehälters (S) das mit dem Stückgutbehälter (S) gekoppelte Koppelglied (4) auf einer in Förderbahnrichtung verlaufenden Raumkurvenbahn zwangsgeführt ist, deren Verlauf sich aus dem Kippbewegungshub des Stückgutbehälters (S) und seiner Transportbewegung in Förderrichtung (F) zusammensetzt.

7. Transportsystem für Stückgutbehälter nach Anspruch 6,
**dadurch gekennzeichnet, dass**
der Verlauf der Raumkurvenbahn durch den Weg bestimmt ist, den das mit dem Stückgutbehälter (S) gekoppelte Koppelglied (4) während des Durchfahrens der Einrichtung zum Entladen des Stückgutes (E) durchläuft.

8. Transportsystem für Stückgutbehälter nach einem der Ansprüche 1 bis 7,
**dadurch gekennzeichnet, dass**
die Bewegungsbahn für jedes Koppelglied (4) Teil einer als endlose Schleife geführten Laufschiene (5) für eine Mehrzahl daran geführter Laufwagen (2) ausgebildet ist, an denen jeweils das Koppelglied (4) angeordnet ist, und dass jeweils ein auf der Laufschiene (5) im Anfangsbereich der Raumkurvenbahn bereitgestellter Laufwagen (2) gesteuert mit einem vorbeigeförderten vorherbestimmten Stückgutbehälter (S) verbindbar und von diesem über die Raumkurvenbahn mitschleppbar ist.

9. Transportsystem für Stückgutbehälter nach einem der Ansprüche 1 bis 8,
**dadurch gekennzeichnet, dass**
das Koppelglied (4) am Ende der Raumkurvenbahn vom Stückgutbehälter (S) lösbar ist und über die als endlose Schleife geführte Laufschiene (5) zum Anfangsbereich der Raumkurvenbahn zurückführbar ist.

10. Transportsystem für Stückgutbehälter nach einem der Ansprüche 1 bis 9,
**dadurch gekennzeichnet, dass**
der auf der Laufschiene (5) im Anfangsbereich der Raumkurvenbahn bereitgestellte Laufwagen (2) von einem Mitnehmer gesteuert zeitgerecht in die Bewegungsbahn des Stückgutbehälter (S) führbar ist.

11. Transportsystem für Stückgutbehälter nach einem der Ansprüche 1 bis 10,
**dadurch gekennzeichnet, dass**
der Mitnehmer als das Koppelglied (4) hintergreifender Nocken (3) am Umfang eines vertikal umlaufenden Rades (1) ausgebildet ist, das unmittelbar neben dem unterhalb der Förderebene verlaufenden Anfangsbereich der Raumkurvenbahn angeordnet ist, die in diesem Bereich parallel zu Umfangsbahn des Rades (1) verläuft.

12. Transportsystem für Stückgutbehälter nach einem der Ansprüche 1 bis 11,
**dadurch gekennzeichnet, dass**
das Koppelglied (4) als sich in Richtung des Stückgutbehälters (S) erstreckende Stange ausgebildet ist, die in eine korrespondierende Ausnehmung des Stückgutbehälter (S) eingreift.

## Claims

1. Conveyor system for article containers (S), especially for luggage containers, on a substantially horizontal conveying path, comprising at least one device (E) for unloading the articles by using the force of gravity by tilting an article container (S) into an unloading position transversely with respect to its conveying direction, **characterized in that** at least two conveyors (6) spaced apart from one another are provided, of which at least one conveyor is driven, the article containers (S) being conveyed resting freely on the two conveyors (6), **in that** the device (E) for unloading the articles has an endless running rail (5), formed as a loop, at the side of a conveyor (6), on which there are guided coupling elements (4) which, controlled from outside, can be coupled to a previously determined article container (S) at the leading end of the running rail loop, as seen in the conveying direction, and can be uncoupled again at the trailing end of the running rail loop, the running rail loop running three-dimensionally such that, during its conveyance through the device, the article container (S) is lifted off the adjacent conveyor (6) on one side by means of the positively guided coupling element (4) and is pivoted into its tilted position.

2. Conveyor system for article containers according to Claim 1, **characterized in that** the article container (S) lifted off at least one of the conveyors (6) can be conveyed with its side edge facing away from the coupling element (4) resting on the other, driven conveyor (6).

3. Conveyor system for article containers according to Claim 2, **characterized in that** at least the driven conveyor (6) is an endlessly circulating conveyor belt.

4. Conveyor system for article containers according to Claims 1 to 3, **characterized in that**, within the device for unloading the article (E), the article container (S) is supported on its side wall surface facing away from the coupling element (4) by means of vertically revolving limiting rollers (9) arranged parallel to the driven conveyor (6).

5. Conveyor system for article containers according to Claims 1 to 4, **characterized in that**, within the device for unloading the article (E), the article container (S) can be supported on its side wall surface facing away from the coupling element by a vertical belt running parallel to the driven conveyor (6).

6. Conveyor system for article containers according to Claims 1 to 5, **characterized in that**, in order to tilt the article container (S), the coupling element (4) coupled to the article container (S) is positively guided on a three-dimensional curved track running in the conveying track direction, the course of which is composed of the tilting movement lift of the article container (S) and its conveying movement in the conveying direction (F).

7. Conveying system for article containers according to Claim 6, **characterized in that** the course of the three-dimensional curved track is determined by the path through which the coupling element (4) coupled to the article container (S) passes as it moves through the device for unloading the article (E).

8. Conveyor system for article containers according to one of Claims 1 to 7, **characterized in that** the movement track for each coupling element (4) is constructed as part of a running rail (5), guided as an endless loop, for a plurality of carriages (2) guided thereon, on which the coupling element (4) is arranged in each case, and **in that** in each case a carriage (2) provided on the running rail (5) in the initial region of the three-dimensional curved track can be connected under control to a previously determined article container (S) conveyed past and can be dragged along with the latter over the three-dimensional curved track.

9. Conveyor system for article containers according to one of Claims 1 to 8, **characterized in that** the coupling element (4) can be detached from the article container (S) at the end of the three-dimensional curved track and can be guided back to the initial region of the three-dimensional curved track over the running rail (5) guided as an endless loop.

10. Conveyor system for article containers according to one of Claims 1 to 9, **characterized in that** the carriage (2) provided on the running rail (5) in the initial region of the three-dimensional curved track can be guided under the control of a driver into the movement path of the article container (S) at the correct time.

11. Conveyor system for article containers according to one of Claims 1 to 10, **characterized in that** the driver is constructed as a cam (3) engaging behind the coupling element (4) on the circumference of a vertically revolving wheel (1), which is arranged immediately beside the initial region of the three-dimensional curved track running underneath the conveying plane, the three-dimensional curved track running parallel to the circumferential path of the wheel (1) in this region.

12. Conveyor system for article containers according to one of Claims 1 to 11, **characterized in that** the coupling element (4) is constructed as a bar that extends in the direction of the article container (S) and engages in a corresponding recess in the article container (S).

## Revendications

1. Système de transport pour conteneurs (S) d'articles, notamment pour conteneurs à bagages, sur une voie de transport sensiblement horizontale, comportant au moins un dispositif (E) pour décharger les articles en utilisant la gravité par basculement d'un conteneur (S) d'articles dans une position de déchargement transversalement à sa direction de transport,
**caractérisé en ce qu'**il est prévu au moins deux convoyeurs (6) mutuellement distants, dont au moins l'un est entraîné, les conteneurs (S) d'articles étant transportés en reposant librement sur les deux convoyeurs (6),
et **en ce que** le dispositif (E) pour décharger les articles comporte, sur le côté d'un convoyeur (6), un rail (5) de roulement sans fin réalisé en forme de boucle, sur lequel sont guidés des éléments (4) d'accouplement qui, en étant commandés de l'extérieur, peuvent être accouplés à un conteneur (S) prédéterminé d'articles à l'extrémité avant, considéré dans la direction de transport, de la boucle de rail de roulement, et qui peuvent en être désaccouplés à l'extrémité arrière de la boucle de rail de roulement, la boucle de rail de roulement s'étendant spatialement de telle sorte que le conteneur (S) d'articles, pendant son transport, est par le dispositif, au moyen de l'élément (4) d'accouplement à guidage forcé, soulevé d'un côté du convoyeur (6) voisin et pivoté dans une position basculée.

2. Système de transport pour conteneurs d'articles suivant la revendication 1, **caractérisé en ce que** le conteneur (S) d'articles soulevé d'au moins un des convoyeurs (6) peut être transporté en reposant par son arête latérale opposée à l'élément (4) d'accouplement sur l'autre convoyeur (6), entraîné.

3. Système de transport pour conteneurs d'articles suivant la revendication 2, **caractérisé en ce qu'**au moins le convoyeur (6) entraîné est une courroie transporteuse circulant sans fin.

4. Système de transport pour conteneurs d'articles suivant l'une des revendications 1 à 3, **caractérisé en ce que** le conteneur (S) d'articles, à l'intérieur du dispositif (E) pour décharger les articles, est soutenu sur sa face de paroi latérale opposée à l'élément (4) d'accouplement par des galets (9) limiteurs verticalement rotatifs, disposés parallèlement au convoyeur (6) entraîné.

5. Système de transport pour conteneurs d'articles suivant l'une des revendications 1 à 4, **caractérisé en ce que** le conteneur (S) d'articles, à l'intérieur du dispositif (E) pour décharger les articles, peut être soutenu sur sa face de paroi latérale opposée à l'élément (4) d'accouplement par une bande verticale s'étendant parallèlement au convoyeur (6) entraîné.

6. Système de transport pour conteneurs d'articles suivant l'une des revendications 1 à 5, **caractérisé en ce que**, pour basculer le conteneur (S) d'articles, l'élément (4) d'accouplement accouplé au conteneur (S) d'articles est guidé de manière forcée sur une trajectoire spatiale courbe, qui s'étend dans la direction de la voie de transport et dont le tracé se compose de la course de mouvement de basculement du conteneur (S) d'articles et de son mouvement de transport dans la direction (F) de transport.

7. Système de transport pour conteneurs d'articles suivant la revendication 6, **caractérisé en ce que** le tracé de la trajectoire spatiale courbe est déterminé par la distance que parcourt l'élément (4) d'accouplement accouplé au conteneur (S) d'articles pendant la traversée du dispositif (E) pour décharger les articles.

8. Système de transport pour conteneurs d'articles suivant l'une des revendications 1 à 7, **caractérisé en ce que** la voie de déplacement pour chaque élément (4) d'accouplement fait partie d'un rail (5) de roulement, dirigé sous forme de boucle sans fin, pour une pluralité de chariots (2) qui y sont guidés et sur chacun desquels est disposé un élément (4) d'accouplement, et **en ce qu'**un chariot (2) respectif mis à disposition sur le rail (5) de roulement dans la région initiale de la trajectoire spatiale courbe peut, d'une manière commandée, être assemblé à un conteneur (S) prédéterminé d'articles transporté devant lui, et emmené par ce dernier sur la trajectoire spatiale courbe.

9. Système de transport pour conteneurs d'articles suivant l'une des revendications 1 à 8, **caractérisé en ce que** l'élément (4) d'accouplement peut être détaché du conteneur (S) d'articles à la fin de la trajectoire spatiale courbe, et ramené vers la région initiale de la trajectoire spatiale courbe au moyen du rail (5) de roulement réalisé sous la forme de boucle sans fin.

10. Système de transport pour conteneurs d'articles suivant l'une des revendications 1 à 9, **caractérisé en ce que** le chariot (2) mis à disposition sur le rail (5) de roulement dans la région initiale de la trajectoire spatiale courbe peut être, en étant commandé par un entraîneur, dirigé au moment opportun dans la voie de déplacement du conteneur (S) d'articles.

11. Système de transport pour conteneurs d'articles suivant l'une des revendications 1 à 10, **caractérisé en ce que** l'entraîneur est réalisé sous la forme d'une came (3) accrochant par l'arrière l'élément (4) d'accouplement et prévue sur le pourtour d'une roue (1) verticalement rotative qui est disposée juste à côté de la région initiale, s'étendant en dessous du plan de transport, de la trajectoire spatiale courbe, trajectoire qui s'étend dans cette région parallèlement à la trajectoire circonférentielle de la roue (1).

12. Système de transport pour conteneurs d'articles suivant l'une des revendications 1 à 11, **caractérisé en ce que** l'élément (4) d'accouplement est réalisé sous la forme d'une tige s'étendant en direction du conteneur (S) d'articles, qui pénètre dans un évidement correspondant du conteneur (S) d'articles.
